# EUROPÄISCHE PATENTANMELDUNG

(11) **EP 0 791 440 A1**
(43) Veröffentlichungstag der Anmeldung: **27.08.1997**
(21) Anmeldenummer: 97101867.6
(22) Anmeldetag: 06.02.1997
(51) Int. Cl.: B26D 7/00

(54) **Schneidewerkzeug in einem Schutzgehäuse mit Ausstosser**

(30) Priorität: 14.02.1996 DE 29602583 U; 14.02.1996 DE 29602525 U; 21.10.1996 DE 29618230 U; 19.12.1996 DE 29622111 U
(71) Anmelder: Lashöfer, Jürgen, 33178 Borchen (DE)
(72) Erfinder: Lashöfer, Jürgen, 33178 Borchen (DE)

(57) **Zusammenfassung**

Anhand Abbildung 3, Beispiel 2.

Am unteren Ende eines Schutzgehäuses (1) befindet sich ein drehbares Antriebsteil (2) mit innenliegendem Gewinde und Materialausstoßer (4), der bündig mit dem Gehäuse abschließt.
Die Drehung am Antriebsteil (2) wird mittels einer unrunden Passung in einen achsialen Vorschub umgewandelt, wodurch das Schneidewerkzeug (5) ohne Eigenrotation aus dem Schutzgehäuse (1) herausgeschoben wird. Bei entgegengesetzter Drehung am Antriebsteil (2) wird das Schneidewerkzeug (5) in das Schutzgehäuse (1) zurückgeführt, wobei das herausgetrennte Material durch den Materialausstoßer (4) herausgedrückt wird.

## Beschreibung

Die Erfindung bezieht sich auf Schneidewerkzeuge, die zum Heraustrennen von Materialien verwendet werden. Schneidewerkzeuge kommen in fast allen Industriezweigen auf unterschiedlichste Art und Weise zum Einsatz. In der Papierindustrie werden sie zum Beispiel zum Herausstanzen von Figuren Heraustrennen von Löchern oder vergleichbaren Aufgaben herangezogen.

Gegenstand der vorliegenden Erfindung ist ein Lochschneider. Er wird zum Herausstanzen oder Schneiden von Formen und Löchern verwendet.

Nachteil der vorhandenen Schneidewerkzeuge ist, daß sich das herausgetrennte Material in dem Werkzeug (Lochschneider) ansammelt, und es zu einem Materialstau kommen kann.
In den meisten Fällen wird das Material lediglich nach hinten aus dem Werkzeug herausgedrückt, wodurch eine gezielte Entsorgung nur schwer möglich ist.
Außerdem kann es zu unsachgemäßem Herauslösen von Material kommen, da das sich im Schneidewerkzeug ansammelnde Material den Arbeitsvorgang be- oder verhindert.
Auch ist die Schneide nicht vor Beschädigung geschützt, was zu erhöhten Kosten führen kann.
Die benutzende Person wird ebenfalls nicht vor Verletzungen geschützt.

Gegenstand der Erfindung ist ein Schneidewerkzeug, das in einem Schutzgehäuse mit Materialausstoßer geführt wird.
Dadurch wird das herausgetrennte Material nach Gebrauch automatisch ausgestoßen, die Schneide durch das Schutzgehäuse vor Beschädigungen und der Benutzer vor Verletzungen geschützt.

Erfindungsgemäß wird dieses bei einem Schneidewerkzeug des obigen Typs dadurch erreicht, daß eine Drehung durch einen Stop (Rotationsverhinderer) in einen achsialen Vorschub umgewandelt wird, die Schneide nach dem Gebrauch vollständig im Schutzgehäuse verschwindet und ein Materialausstoßer, der mit dem Schutzgehäuse abschließt und sich im Inneren der Schneide befindet, das Material beim Zurückführen der Schneide automatisch herausdrückt.

Ein erfindungsgemäßes Schneidewerkzeug weist verschiedene Vorteile auf. Durch den Materialausstoßer wird das Material nach dem Schneidevorgang und beim Zurückführen der Schneide, herausgedrückt und kann entsprechend entsorgt werden.
Die Schneide wird vor Beschädigungen bei Nichtgebrauch geschützt, da sie sich dann im Schutzgehäuse befindet. Auch Verletzungen von Personen werden vermieden.

Im folgenden wird die Erfindung anhand dreier Beispiele und mit Bezug auf die beiliegenden Zeichnungen näher erläutert.

### Beispiel 1: Schneidewerkzeug in einem Schutzgehäuse mit Ausstoßer und arretierbarem Schnellvorschub

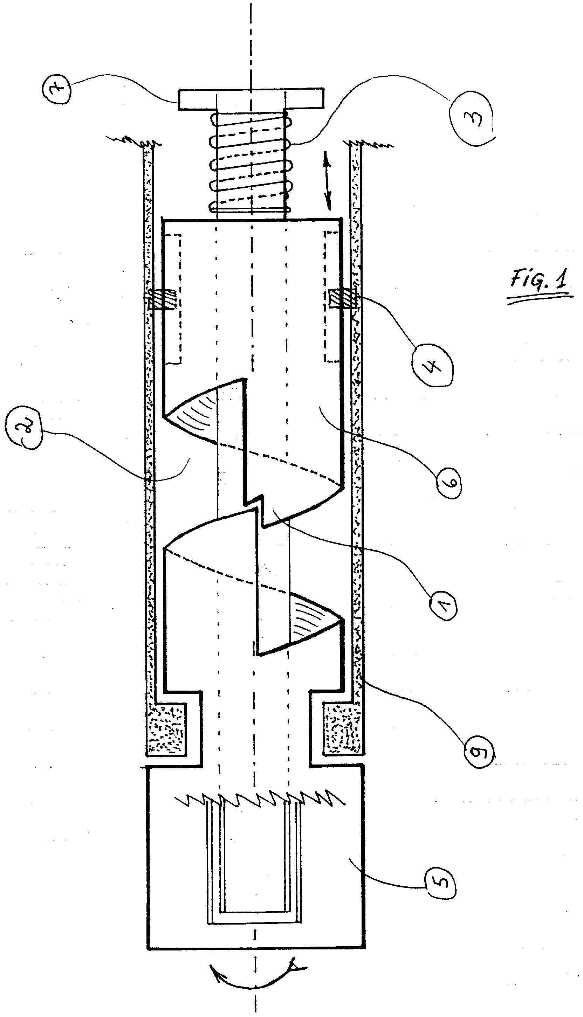

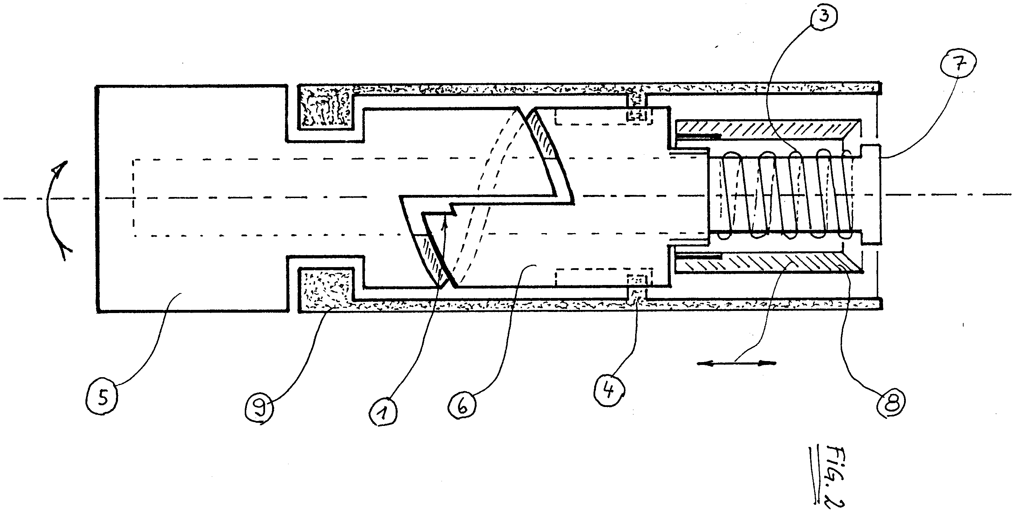

Das Beispiel 1 wird anhand der Abbildungen 1 und 2 erläutert.

Durch Drehen gegen den Uhrzeigersinn am Antriebsteil (5) wird die Schiebebuchse (6) entlang der Gewindesteigung (2) achsial aus dem Schutzgehäuse (9) verschoben. Dabei wird die Schiebebuchse (6) durch die Verdrehsicherung (4) an der Ausführung einer Eigenrotation gehindert. Dadurch wird die Drehung am Antriebsteil (5) in einen achsialen Vorschub umgewandelt. Mit Erreichen des Endes der Gewindesteigung (2) rastet die Schiebebuchse (6) in die Raste (1) ein. Nun ist das Schneidewerkzeug (8) vollständig aus dem Schutzgehäuse (9) herausgeschoben. Durch Drehen am Antriebsteil (5) im Uhrzeigersinn ist das Schneidewerkzeug (8) gebrauchsfertig und kann zum Heraustrennen von Material eingesetzt werden. Dreht man am Antriebsteil (5) gegen den Uhrzeigersinn, wird die Positionierung in der Raste (1) aufgehoben, und die Schiebebuchse (6) wird durch die Feder (3) wieder in seine Ausgangslage gebracht. Dabei werden die herausgetrennten Materialreste, die sich im Schneidewerkzeug (8) angesammelt haben, durch den Materialausstoßer (7) ausgeworfen.

### Beispiel 2: Schneidewerkzeug in einem Schutzgehäuse mit Materialausstoßer

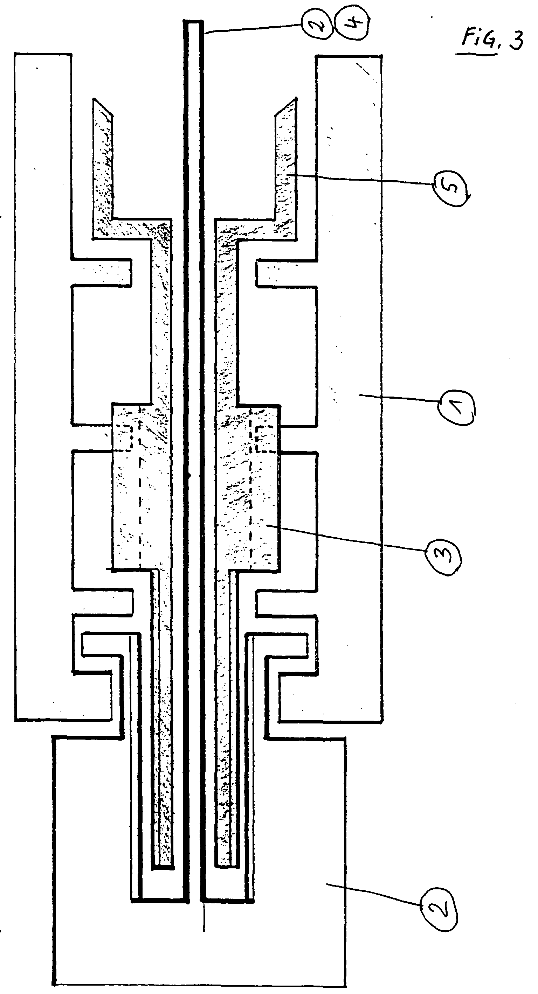

Das Beispiel 2 wird anhand der Abbildung 3 erläutert.

Am unteren Ende eines Schutzgehäuses (1) befindet sich ein drehbares Antriebsteil (2) mit innenliegendem Gewinde und Materialausstoßer (4), der bündig mit dem Gehäuse abschließt. Das Schneidewerkzeug (5), welches sich zwischen Materialausstoßer (4) und Schutzgehäuse (1) befindet, besitzt im unteren Teil ein Außengewinde, welches sich im Innengewinde des Antriebsteiles (2) befindet.
Durch Drehen am Antriebsteil (2) in Uhrzeigersinn wird das Schneidewerkzeug (5) achsial nach vorne verschoben, da eine Eigenrotation des Schneidewerkzeuges (5) wegen des Rotationsverhinderers (Sechskant, Vierkaut...) (3) nicht möglich ist.
Nach Gebrauch wird das Schneidewerkzeug (5) durch Drehen am Antriebsteil wieder in die Ausgangsposition gebracht, dabei wird das her Schneidewerkzeug (5) herausgedrückt.

### Beispiel 3: Lochschneidewerkzeug mit auswechselbarer Klinge

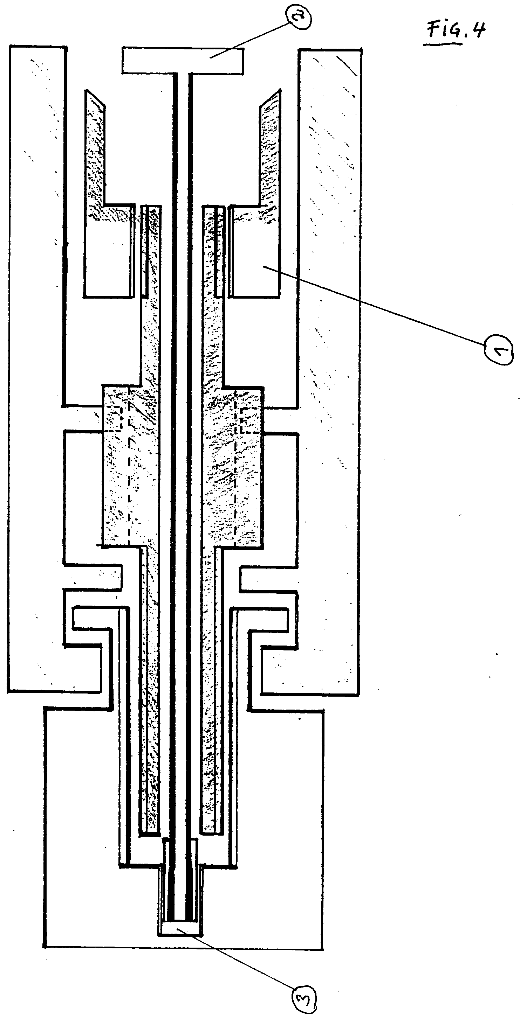

Das Beispiel 3 wird anhand der Abbildung 4 erläutert.

Bei Beschädigung der Schneide (1) wird zunächst der Anschlag (2) aus dem Gehäuse (4) durch Drehen gegen den Uhrzeigersinn herausgedreht. Durch Drehen am Antriebsteil (5) wird die Schneide (1) nach vorne ohne Eigenrotation aus dem Gehäuse (4) geschoben.
Das Antriebsteil (5) wird fixiert und die Schneide (1) gegen den Uhrzeugersinn gedreht, wodurch sie aus dem Gehäuse herausgedreht wird. Nun kann eine neue Schneide eingesetzt werden.

### Beispiel 4: Lochschneider mit Materialausstoßer und Schutzkappe

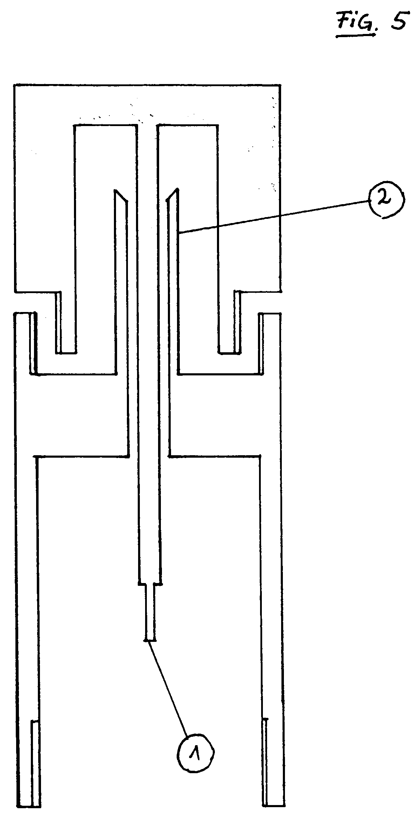

Das Beispiel 4 wird anhand der Abbildung 5 erläutert.

Durch das Anschleifen des Randes eines runden Rohres entsteht eine Schneide, mit der Material aus Werkstoffen herausgetrennt werden kann. Beim Aufdrehen der Schutzkappe nach Gebrauch des Lochschneiders (2), wird das angesammelte Material durch den Materialausstoßer (1) aus dem Schneidewerkzeug herausgedrückt.

### Weitere Beschreibung eines Ausführungsbeispiels

Um eine Zigarre rauchen zu können, muß das Deckblatt an der Zigarrenspitze abgetrennt werden. Dieses geschieht derzeit mit einem Messer. Statt dessen wird nun mit einem Lochschneider ein Loch schonend in die Zigarrenspitze geschnitten. Das herausgetrennte Material blockiert jetzt den Innenraum des Schneiders. Daher erfordert der weitere Gebrauch des Schneiders einen erhöhten Druck auf die Zigarre, was zum Zerreißen des Deckblattes führen kann. Dieses wird durch den integrierten Ausstoßer vermieden. Auch kann das Schneidegut wunschgemäß entsorgt werden. Beim Transport des Lochschneiders wird der Besitzer durch das Schutzgehäuse vor unerwünschten Verletzungen bewahrt.

## Patentansprüche

1. a) Ansprüche nach Abbildung 3, Beispiel 2.
1a) Schneidewerkzeug, das in einem Schutzgehäuse mit Materialausstoßer geführt wird,
dadurch gekennzeichnet, daß sich am unteren Ende eines Schutzgehäuses (1), ein drehbares Antriebsteil (2) mit innenliegendem Gewinde und Materialausstoßer (4) befindet, der bündig mit dem Gehäuse abschließt. Das Schneidewerkzeug (5), welches sich zwischen Materialausstoßer (4) und Schutzgehäuse (1) befindet, besitzt im unteren Teil ein Außengewinde, welches sich im Innengewinde des Antriebsteils (2) befindet.
2a) Schneidewerkzeug gemäß Anspruch 1
dadurch gekennzeichnet, daß das Schneidewerkzeug (5) ohne Eigenrotation durch Drehung am Antriebsteil (2), welche mittels einer unrunden Passung in einen achsialen Vorschub umgewandelt wird, aus dem Schutzgehäuse (1) herausgeschoben wird.
b) Anspruch nach Abbildung 1 und 2, Beispiel 1.
1b) Schneidewerkzeug, das in einem Schutzgehäuse mit Materialausstoßer geführt wird,
dadurch gekennzeichnet, daß sich am unteren Ende eines Schutzgehäuses (9), ein drehbares Antriebsteil (5) mit innenliegendem Gewinde und Materialausstoßer (7) befindet, der bündig mit dem Gehäuse abschließt. Das Schneidewerkzeug (8), welches sich zwischen Materialausstoßer (7) und Schutzgehäuse (9) befindet, besitzt im unteren Teil ein Innengewinde, welches sich im Außengewinde der Schiebebuchse (6) befindet.
2b) Schneidewerkzeug gemäß Anspruch 1
dadurch gekennzeichnet, daß das Schneidewerkzeug (8) ohne Eigenrotation durch Drehung am Antriebsteil (5), welche mittels einer Verdrehsicherung (4) in einen achsialen Vorschub umgewandelt wird, aus dem Schutzgehäuse (9) herausgeschoben wird.
c) Anspruch nach Abbildung 4, Beispiel 3.
1c) Lochschneidewerkzeug mit auswechselbarer Klinge, die in einem Gehäuse geführt wird,
dadurch gekennzeichnet, daß die Lochschneideklinge (1), nach Herausdrehen des Anschlages (2), herausgedreht werden kann.
d) Anspruch nach Abbildung 5, Beispiel 4.
1d) Materialausstoßer als Führung für die Schutzkappe eines Lochschneiders,
dadurch gekennzeichnet, daß der Materialausstoßer (1) als Führung in den Lochschneider (2) eingeführt wird.
